# EUROPEAN PATENT APPLICATION

(11) **EP 4 687 361 A1**
(43) Date of publication of application: **04.02.2026**
(21) Application number: 25191246.5
(22) Date of filing: 23.07.2025
(51) Int. Cl.: H04W 24/10, H04W 76/28

(54) **METHODS AND SYSTEM FOR CANCELLATION OF MEASUREMENT GAP**

(30) Priority: 29.07.2024 US 202463676821 P; 02.07.2025 US 202519258623
(71) Applicant: Samsung Electronics Co., Ltd., Suwon-si, Gyeonggi-do 16677 (KR)
(72) Inventor: AWADIN, Mohamed, San Jose, CA, 95134 (US); BAE, Jung Hyun, San Jose, CA, 95134 (US)
(74) Representative: Kuhnen & Wacker Patent- und Rechtsanwaltsbüro PartG mbB

(57) **Abstract**

A system and a method are disclosed for providing measurement gap canceling may be utilized in wireless communication technologies, such as 5G NR technology. Measurement gap canceling may include dynamically modify the timing and/or selection of measurement gaps to be canceled in a manner that can enhance capacity gains of wireless network devices, while limiting an impact to mobility performance. Measurement gap canceling circuitry may be implemented by a network resource (e.g., user equipment, UE, device (112), base station, etc.) that is configured to determine a measurement gap that may be optimal for canceling based on various conditions (e.g., timing of measurement gap indication(s), processing time for UE device (112), etc.), and enable transmission/reception communication during the measurement gaps (e.g., canceling the measurement gap) in a manner that may reduce latency in the wireless communication network and improve the overall user experience (e.g., reducing data interruptions) for wireless devices.

## Description

### BACKGROUND

### FIELD

Aspects of some embodiments of the present disclosure generally relate to wireless communication systems. More particularly, the subject matter disclosed herein relates to improvements to radio resource management including measurement gap canceling.

### DESCRIPTION OF THE RELATED ART

Radio resource management (RRM) may be utilized in wireless communication technologies, such as 5G NR (New Radio) technology, to support efficient allocation and/or manage of available radio resources, for example, within the 5G air interface. For example, a function of RRM in 5G NR may include handover management to ensure a seamless transition of user equipment (UEs) between cells and/or beams.

Measurement gaps may be time periods during which a user equipment (UE) device may temporarily stop receiving and/or transmitting data to perform one or more RRM related measurement functions (e.g., measure frequencies, neighboring cell quality, etc.). Measurement gaps may enable measurements to be performed on downlink signals, and may support functions like inter-frequency measurements, which are utilized to provide high mobility and support RRM functions such as handovers between different radio access technologies (RATs) or frequencies. However, there may be trade-offs associated with utilizing measurement gaps. For example, the timing and frequency of measurement gaps may lead to inefficient pausing in network communication to perform these measurement functions in a manner that may reduce resource throughput, increase latency, increase the interruption of data or ongoing services, and/or reduce the overall performance of the wireless network.

To address these, and other, drawbacks, it may be desirable to implement measurement gap canceling techniques that may be utilized in wireless communication technologies, such as 5G NR technology. Furthermore, by adjusting measurement gap canceling operations based on resource related conditions (e.g., processing time for the UE) the efficiency and/or accuracy of measurement gap canceling may be improved in a manner that may reduce errors and ultimately optimize network performance.

The above information disclosed in this Background section is for enhancement of understanding of the background of the present disclosure, and therefore, it may contain information that does not constitute prior art.

### TECHNICAL FIELD

The disclosure generally relates to wireless communication networks. More particularly, the subject matter disclosed herein relates to improvements to resource management including measurement gap canceling and processing time determination.

### SUMMARY

Aspects of some embodiments of the present disclosure generally relate to measurement gap canceling techniques that may be utilized in wireless communication technologies, such as 5G NR technology. In some embodiments, a method includes: receiving, at a user equipment (UE) device, a measurement gap canceling indication, the measurement gap canceling indication including an indication of a corresponding measurement gap to be canceled; determining the corresponding measurement gap to be canceled from one or more scheduled measurement gaps for the UE device based on a processing time for the UE device; and executing a measurement gap canceling operation for the corresponding measurement gap based on the determining.

In some embodiments, the measurement gap canceling indication may include a Downlink Control Information (DCI) message received over a Physical Downlink Control Channel (PDCCH).

In some embodiments, the DCI message may include a bit field including a bit for the indication of the corresponding measurement gap to be canceled.

In some embodiments, the DCI message may include an indication of a time window including the corresponding measurement gap to be canceled.

In some embodiments, the DCI message may include a bit field including a bitmap for indicating one or more corresponding measurement gaps to be canceled.

In some embodiments, determining the corresponding measurement gap to be canceled may include determining a time period starting from an end of the PDCCH and including the processing time of the UE device.

In some embodiments, determining the corresponding measurement gap to be canceled may include determining a first measurement gap from the one or more scheduled measurement gaps to start after the time period.

In some embodiments, determining the corresponding measurement gap to be canceled may include determining a first measurement gap from the one or more scheduled measurement gaps to start after an end of the PDCCH.

In some embodiments, the method may further include determining if the first measurement gap starts after a time period starting from an end of the PDCCH and including the processing time of the UE device.

In some embodiments, the method may further include, in response to determining the first measurement gap to start after the time period, executing the measurement gap canceling operation for the first measurement gap.

In some embodiments, the processing time for the UE device may be indicated via capability signaling transmitted via the UE device.

In some embodiments, executing the measurement gap canceling operation for the corresponding measurement gap may include enabling transmission or reception communication during the corresponding measurement gap.

In some embodiments, a device includes: a processor; and a memory storing instructions that, based on being executed by the processor, cause the processor to: receive a measurement gap canceling indication, the measurement gap canceling indication including an indication of a corresponding measurement gap to be canceled; determine that the corresponding measurement gap to be canceled satisfies a threshold based on a processing time for the device; and execute a measurement gap canceling operation for the corresponding measurement gap based on the determining.

In some embodiments, the device may be a UE device.

In some embodiments, the measurement gap canceling indication may be received from a base station.

In some embodiments, the measurement gap canceling indication may include a DCI message received over a PDCCH.

In some embodiments, a threshold may include the corresponding measurement gap starting after a time period starting at an end of the PDCCH and including the processing time for the UE device.

In some embodiments, the processing time for the UE device may be indicated via capability signaling transmitted via the UE device.

In some embodiments, the measurement gap canceling operation for the corresponding measurement gap may include enabling a transceiver of the UE device.

In some embodiments, a system includes: a processing circuit; and a memory device storing instructions, which, based on being executed by the processing circuit, cause the processing circuit to perform: receiving a measurement gap canceling indication, the measurement gap canceling indication including an indication of a corresponding measurement gap to be canceled; determining the corresponding measurement gap to be canceled from one or more scheduled measurement gaps based on a processing time associated the system; and executing a measurement gap canceling operation for the corresponding measurement gap based on the determining.

### BRIEF DESCRIPTION OF THE DRAWING

In the following section, the aspects of the subject matter disclosed herein will be described with reference to exemplary embodiments illustrated in the figures.
FIG. 1 illustrates an example wireless network system implementing measurement gap canceling, including processing time determination, according to some embodiments of the present disclosure.
FIG. 2 is a block diagram illustrating an example user equipment (UE) device for measurement gap canceling implementing an radio resource management (RRM) circuit that includes measurement gap canceling circuity, according to some embodiments of the present disclosure.
FIG. 3 is a diagram illustrating an example of timing for communicating measurement gap canceling indications and measurement gaps that may be determined by the measurement gap canceling circuitry, according to some embodiments of the present disclosure.
FIG. 4 is a diagram illustrating an example of timing for communicating measurement gap canceling indications and measurement gaps that may be determined based on processing time determination, according to some embodiments of the present disclosure.
FIG. 5 is a diagram illustrating another example of timing for communicating measurement gap canceling indications for multiple measurement gaps to be canceled that may be determined by the measurement gap canceling circuitry, according to some embodiments of the present disclosure.
FIG. 6 is a diagram illustrating another example of timing for communicating measurement gap canceling indications for multiple measurement gaps to be canceled that may be determined based on the processing time, according to some embodiments of the present disclosure.
FIG. 7 is a flowchart illustrating a method implementing measurement gap canceling including processing time determination, according to some embodiments of the present disclosure.
FIG. 8 is a block diagram of an electronic device implementing measurement gap canceling, including processing time determination, according to some embodiments of the present disclosure.
FIG. 9 illustrates a system including a UE and a general Nodes B (gNB) in communications with each other.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in some embodiments (e.g., in one or more embodiments). In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

In the realm of wireless networking technologies, for example 5G NR, measurement gap canceling may involve implementing mechanisms (e.g., analyzing real-time conditions, predictive algorithms, etc.) at the UE device and/or at the network side (e.g., base station) related to determining, indicating, and/or executing various measurement gap canceling operations. The system may determine if a scheduled measurement gap can proceed and/or may be canceled. For example, the system may decide to execute measurement gap canceling operations based on several factors, including but not limited to: UE speed and/or mobility status (e.g., if the device is stationary or moving slowly, measurements might not be needed frequently); current signal quality (e.g., if the serving cell's signal is strong and/or stable, searching for a better one may be unnecessary); measurement history/trends (e.g., if prior measurements consistently return similar or poor results from neighboring cells, new ones might be skipped); network configuration/policy (e.g., the operator may configure thresholds and rules for when gaps should be canceled); and/or the like. If conditions are met that may be deemed suitable for canceling a measurement gap, the network may send a control signal to a UE device and/or the can UE device can internally decide to cancel the next measurement gap, thereby maintaining its normal transmission and/or reception.

Aspects of some embodiments of the present disclosure provide measurement gap canceling methods and systems that may implement functions to dynamically modify the timing and/or selection of measurement gaps to be canceled in a manner that can enhance capacity gains of wireless network devices (e.g., virtual reality (VR) devices, augmented reality (AR) devices, extended reality (XR) devices, and/or the like), while limiting an impact to mobility performance. In some embodiments, measurement gap canceling circuitry may be implemented by a network resource (e.g., UE device, base station, etc.) that is configured to determine a measurement gap that may be optimal for canceling based on various conditions (e.g., timing of measurement gap indication(s), processing time for UE device, etc.), and enable transmission/reception communication during the measurement gaps (e.g., canceling the measurement gap) in a manner that may reduce latency in the wireless communication network and improve the overall user experience (e.g., reducing data interruptions) for wireless devices. In some embodiments, measurement gap canceling circuitry may be configured to determine and/or communicate a processing time that may be required for a UE device to perform functions related to measurement gap canceling, and determine a minimum time period (e.g., relative to receiving a measurement gap canceling indication) used to select or indicate a measurement gap to be canceled based on the processing time for the UE.

According to some embodiments, the measurement gap canceling circuitry may be further configured to determine and/or modify the measurement gaps that are selected or indicated for canceling, based on various conditions, such as a processing time that may be required by the UE to suitably process data (e.g., measurement gap canceling indication) related to measurement gap canceling. Accordingly, the measurement gap canceling circuitry may be configured to determine when to cancel and corresponding measurement gap in accordance with a received measurement gap canceling indication, and/or when to override a measurement gap canceling indication and therefore not cancel the corresponding measurement gap. Additionally, in some embodiments, the measurement gap canceling circuitry may be configured to determine and/or execute corresponding functions relative to other Radio Access Network (RAN) Layer 1 (Physical Layer) (e.g., RAN1) procedures when a measurement gap canceling indication is overridden and the corresponding measurement gap is not canceled.

In some embodiments, measurement gap canceling may involve implementing formats and techniques for communicating measurement gap canceling indications, which may indicate (e.g., explicitly and/or implicitly) one or more corresponding measurement gaps to be canceled, for example utilizing a bitmap indicating multiple measurement gaps to be canceled. In some embodiments, the measurement gaps to be canceled that are indicated by the measurement gap canceling indication may be determined and/or adjusted based on a processing time of the UE, thereby improving the accuracy and/or efficiency of measurement gap canceling operations.

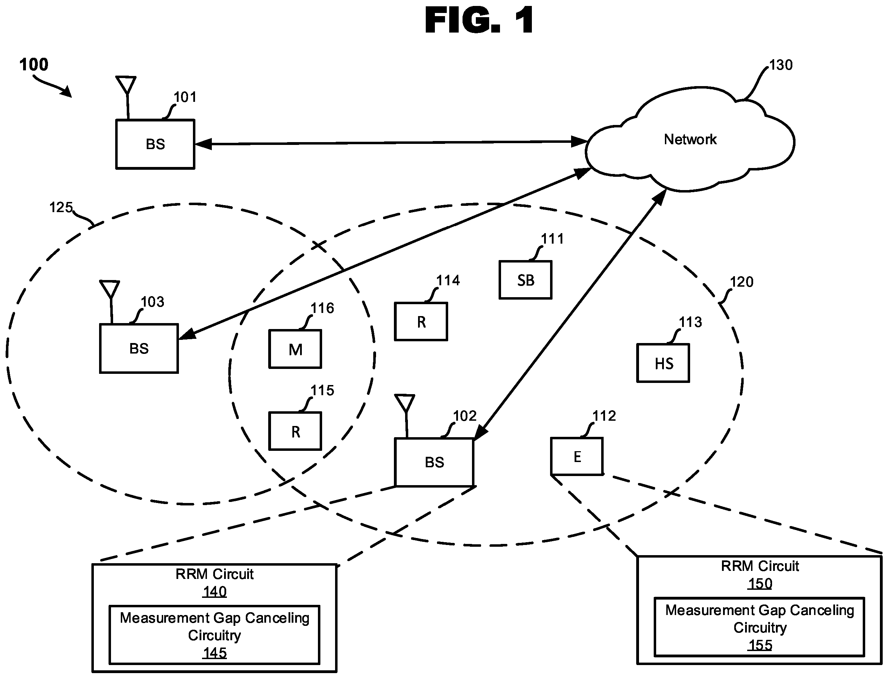

FIG. 1 illustrates an example wireless network system 100 implementing measurement gap canceling including processing time determination, according to some embodiments of the present disclosure.

As illustrated in FIG. 1, the wireless network system 100 may include multiple base stations (BS), also referred to herein as general Nodes B (gNB), shown as a gNB 101, a gNB 102, and a gNB 103. The gNB 101 may communicate with the gNB 102 and the gNB 103. The gNB 101 may also communicate with at least one network (e.g., an Internet Protocol (IP) network) 130, such as the Internet, a proprietary IP network, or other data network. Instead of gNB, a component may also be referred to herein as an enhanced Node B (eNB). Depending on the network type, other terms can be used instead of gNB or BS, such as "access point" and/or the like. As used herein, "gNB" may refer to a base station (BS) and/or a network infrastructure component that provides wireless access to remote terminals. Also, the wireless network 100 may include multiple wireless communication devices that may be associated with an end user, shown as user equipment (UE) devices 111-116. As used herein, "UE" may refer to remote wireless equipment that wirelessly accesses a gNB. The UE devices 111-116 may be implemented as a mobile device (e.g., a mobile telephone, a smartphone, a cellular device, a cell phone, etc.) and/or a stationary device (e.g., a desktop computer, etc.). Depending on the network type, other terms can be used instead of UE, such as "mobile station," "subscriber station," "remote terminal," "wireless terminal," or "user device."

The gNB 102 may provide wireless broadband access to a network 130 for multiple UE devices within a geographical area covered by the gNB 102, shown as cell 120. As used herein a "cell" may refer to a geographical area covered by a single gNB where a UE device can connect to the network. In the example of FIG. 1, the UE devices in cell 120 may be situated in disparate remote locations, and may include a UE device 111, which can be located in a small business (SB); a UE device 112, which can be located in an enterprise (E); a UE device 113, which can be located in a WiFi hotspot (HS); a UE device 114, which can be located in a first residence (R); a UE device 115, which can be located in a second residence (R); and a UE device 116, which can be a mobile device (M) like a cell phone, a wireless laptop, a wireless PDA, and/or the like. The gNB 103 may provide wireless broadband access to the network 130 for multiple UE devices within a cell 125 of the gNB 103. The UE devices in cell 125 may be situated in disparate remote locations and may include the UE device 115 and the UE device 116. In some embodiments, one or more of the gNBs 101-103 can communicate with each other and with the UE devices 111-116 using wireless technologies in accordance with known standards, including but not limited to: 5G NR; long term evolution (LTE) LTE; long term evolution-advanced (LTE-A); WiMAX; and/or other advanced wireless communication techniques.

Dotted lines in FIG. 1 may represent an approximate extent of the cells 120 and 125, which are shown as approximately circular for the purposes of illustration and explanation. For example, the cells (e.g., coverage areas) associated with gNBs 101, 102, 103, such as the cells 120 and 125, can have other shapes, including irregular shapes, depending upon the configuration of the gNBs 101, 102, 103 and variations in the radio environment associated with natural and man-made obstructions. The gNBs 101, 102, 103 may provide wireless access in accordance with one or more wireless communication protocols including but not limited to: 5G; 5G NR; 3GPP NR; LTE; LTE-A; high speed packet access (HSPA), Wi-Fi 802.11 a/b/g/n/ac; and/or other advanced wireless communication techniques.

The gNBs 101-103 may implement a transmit (TX) path that is analogous to transmitting in the downlink (DL) to UE devices 111-116 and may implement a receive (RX) path that is analogous to receiving in the uplink from UE devices 111-116. In an operational example, the gNB 102 may perform DL transmissions to UE devices 111-116 in the coverage area 120. For example, DL transmission from the gNB 102 may involve transmitting data and/or control signals to be received by the UE devices 111-116 over a wireless channel, in accordance with one or more wireless communication protocols. DL communication may be utilized for delivering data and/or control signals from the network (e.g., gNB) to the UE devices to support several services and/or applications (e.g., browsing Internet content, software updates, streaming services, etc.).

The UE devices 111-116 may implement the TX path for transmitting in the uplink (UL) to the gNBs 101-103 and may implement the RX path for receiving in the DL from the gNBs 101-103. In another operational example, one or more of the UE devices 111-116 in the coverage area 120 may perform UL transmissions to the gNB 102. As an example, an UL transmission from the UE device 112 may involve transmitting data and/or control signals to be received by the gNB 102 over a wireless channel in accordance with one or more wireless communication protocols. The UL communication may be utilized for transmitting user-generated data (e.g., uploads, voice, sensor data, etc.), for example, and maintaining the connections with the gNBs 101-103 through signaling and feedback.

In some embodiments, one or more of the UE devices 111-116 may include circuitry, programing, and/or a combination thereof for implementing the capabilities and/or functions related to measurement gap canceling functions including processing time determination, as disclosed herein. In some embodiments, one or more of the gNBs 101-103 may include circuitry, programing, or a combination thereof for implementing the capabilities and/or functions related to measurement gap canceling functions including processing time determination. For example, FIG. 1 illustrates that gNB 102 may include an RRM circuit 140 including measurement gap canceling circuitry 145, which enables the gNB 102 to execute the capabilities and/or functions for (network side) measurement gap canceling including processing time determination, as disclosed in greater detail herein; and UE device 112 may implement or include an RRM circuit 150 including measurement gap canceling circuitry 155, which enables the UE device 112 to execute the capabilities and/or functions for (UE side) measurement gap canceling functions including processing time determination, as disclosed in greater detail herein.

As used herein, "radio resource management" may refer to algorithms, functions, and procedures that may be used to efficiently manage and/or allocate radio spectrum resources in a manner that may aim to optimize network performance (e.g., data throughput, latency, and power consumption, etc.). For example, RRM functions may involve considering factors like channel quality and user demands, and dynamically adjusting radio related parameters (e.g., transmit power, modulation schemes, and time slots assigned to each user, etc.). In some embodiments, the RRM circuits 140, 150 may implement multiple functions related to RRM and management of radio resources for wireless communication, including but not limited to: power control; beam management; resource scheduling; load balancing; handover management; interference management; resource allocation and/or admission control; link adaptation; QoS management; and/or the like. In some embodiments, the RRM circuits 140, 150 may be configured to perform functions involving aspects of RRM related measurements including but not limited to: scheduling and/or executing measurement gaps; configuring, obtaining and/or reporting RRM related measurements (e.g., SINR, RSRP, RSRQ, etc.); scheduling and/or executing measurement gap canceling; and/or the like.

In some embodiments, the RRM circuits 140, 150, may implement one or more RRM operations, such as handover, that rely on performing and reporting various measurements (e.g., L3 measurements), such as measured signal strength. For example, the RRM circuits 140, 150 may be configured to schedule a measurement gap, where several RRM related measurements (e.g., measuring neighboring cell's signal quality, etc.) can be obtained and reported between the gNB 102 and the UE device 112 to trigger a handover to a new cell, for example. In one or more embodiments, functions related to scheduling the measurement gaps for a UE device (e.g., UE device 112) as described herein, may be performed in accordance with a wireless communication technology standard, for example 5G NR. The measurement gap canceling circuitry 145, 155 may be configured to optimize RRM related measurements, including measurement gap operations, by dynamically and strategically determining when to cancel an upcoming measurement gap (e.g., scheduled for executing the RRM related measurements of the RRM circuits 140, 150), thereby mitigating the frequent interruption of TX/RX communication between the gNB 102 and the UE device 112 in order to increase capacity of the UE device 112 (e.g., handle more data transmission and receive more information from the network), improved the overall user experience, and increase efficiency of the wireless network system 100.

As used herein, "measurement gap canceling" may refer to methods configured to cancel, stop, pass (e.g., by-pass, skip, etc.), and/or not utilize a measurement gap (to obtain RRM related measurements) in conditions when measurement(s) may be deemed unnecessary and/or information can be obtained without executing measurement operations in the schedule measurement gap. For example, the measurement gap canceling circuitry 145 of the gNB 102 may be configured to monitor the UE device 112 and determine that the UE device 112 is stationary (e.g., measurements obtained in upcoming measurement gap(s) would not provide new information and/or substantially significant information). Accordingly, the measurement gap canceling circuitry 145 may dynamically determine that it is less optimal, based on the current conditions, to pause (e.g., disrupt) TX/RX communication in order to perform measurement operations in the upcoming measurement gap(s) and thus may transmit an indication to the UE 112 to cancel one or more scheduled measurement gaps.

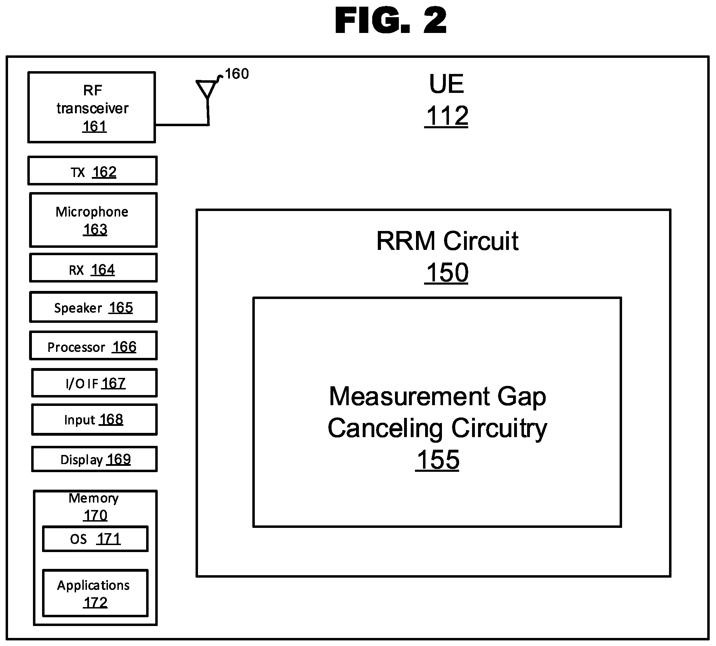

In some embodiments, the measurement gap canceling circuitry 145 of the gNb 102 may be configured to execute one or more functions related to the canceling of measurement gaps, including, but not limited to: monitoring UE measurements and mobility states (e.g., monitoring RRM related measurement reports from UEs (RSRP, RSRQ, SINR, etc.); monitoring UE mobility indicators (e.g., speed estimation, handover history, etc.); serving cell conditions (e.g., handover, cell coverage, etc.)); determining canceling of measurement gaps based on condition factors (e.g., UE mobility, serving cell quality, handover, network environment stability, interference, etc.); indicating the one or more corresponding measurement gap(s) to be canceled (e.g., implicit indication, explicit indication, etc.); handling UE response (e.g., ACK reception from UE, etc.); updating UE context/state (e.g., after successful canceling); error handling (e.g., retransmissions of RRC); determining a processing time (e.g., related to the UE processing the measurement gap canceling indication) and/or a minimum time period (e.g., relative to the received measurement gap indication and the corresponding measurement gap to be canceled); and/or the like. The functions implemented by the measurement gap canceling circuitry 145 to execute the processing time determination aspects of measurement gap canceling, as disclosed herein, are described in greater detail in reference to FIG. 2 - FIG. 6.

In some embodiments, the measurement gap canceling circuitry 155 of the UE device 112 may be configured to execute one or more functions related to the canceling of measurement gaps, including, but not limited to: receiving and/or processing an indication of measurement gaps to be canceled; canceling measurement gap(s) (e.g., enable TX/RX during cancel measurement gap, etc.); preparing and/or transmit acknowledgement of measurement gap canceling; determining and/or communicating a processing time (e.g., related to the UE processing the measurement gap canceling indication) and/or a minimum time period (e.g., relative to the received measurement gap indication and the corresponding measurement gap to be canceled); and/or the like. The functions implemented by the measurement gap canceling circuitry 155 to execute the processing time determination aspects of measurement gap canceling, as disclosed herein, are described in greater detail in reference to FIG. 2 - FIG. 6.

In some embodiments, the measurement gap canceling circuitry 145, 155 is configured to implement explicit indication of measurement gap canceling and/or implicit indication of measurement gap canceling. Explicit indication of measurement gaps to be canceled may involve utilizing a control signaling mechanism, such as Downlink Control Information (DCI) message, which includes information that directly identifies one or more measurement gaps and/or time windows to be canceled. For example, the measurement gap canceling circuitry 145 of the gNB 140 may be configured to utilize a Physical Downlink Control Channel (PDCCH) to transmit a DCI message including a bit field (e.g., bit, bitmap, etc.) having data to specify to the measurement gap circuitry 155 of the UE device 112 one or more measurement gaps to be canceled. In some embodiments, the measurement gap canceling indication may include information that directly indicates and/or corresponds to a scheduled measurement gap for a UE device, for instance a measurement gap ID. In some embodiments, the measurement gap canceling indication may include information that is an associated identification for a measurement gap, for instance a bit to signify that a "next" or "first" measurement gap is to be canceled (e.g., without utilizing a directly corresponding measurement gap ID).

In a similar manner, the measurement gap canceling circuitry 145 of the gNB 140 may be configured to send a DCI message including a field having data to specify a time window. By indicating a time window, corresponding measurement gaps may that are scheduled to occur within the specified time window are identified to be canceled. In some embodiments, the DCI message may have a format that includes information indicating the start time and/or a time length for a designated time window. The DCI message may be implemented as a scheduling DCI used to allocate resources for downlink data and/or uplink data, and/or the DCI may be implemented as a non-scheduling DCI used for communicating control information, such as power control commands, slot indication, and/or the like.

In response to receiving a measurement gap canceling indication having an explicit indication format, the measurement gap canceling circuitry 155 may control and/or effectuate reconfiguring, communication, and component adjustment operations of the UE device 112 during the time of the corresponding measurement gap, such as enabling TX/RX for the UE 112, suspending RRM related measurement and reporting functions for the UE 112, and/or the like. Thus, the UE device 112 may execute one or more measurement gap canceling operations at a time when the corresponding measurement gap occurs in order to execute cancelation of the corresponding measurement gap(s) that have been explicitly indicated by the measurement gap canceling indication transmitted from the gNB 102 (e.g., indicated by the bit field of the DCI message). In some embodiments, measurement gap canceling operations may involve the gNB 102 scheduling a downlink Physical Downlink Shared Channel (PDSCH) to carry a Radio Resource Control (RRC) reconfiguration message to the UE device 112. For example, the gNB 102 may schedule a PDSCH to carry a RRC reconfiguration message to the UE device 112 that instructs the UE 112 to release, cancel (e.g., null) and/or not execute the measurement gap to be canceled as identified in the measurement gap canceling indication transmitted by the gNB 102 (e.g., a corresponding measurement gap indicated in the bit field of the DCI).

Implicit indication may involve the measurement gap canceling circuitry 145 of the gNB 140 utilizing a control signaling mechanism, such as DCI, to schedule TX/RX that overlaps one or more of the previously scheduled measurement gaps. For example, the measurement gap canceling circuitry 145 of the gNB 140 may be configured to send a DCI on a PDCCH that indicates a scheduled downlink (RX) communication for the UE 112 at a time that overlaps a previously scheduled measurement gap. In response to receiving a measurement gap canceling indication having an implicit indication format, the measurement gap canceling circuitry 155 may be directed to perform TX/RX communication at the same time as a previously scheduled measurement gap, the UE device 112 may then continue TX/RX communication (rather than pausing the TR/RX for obtaining RRM related measurements) during that time, thereby canceling the corresponding measurement gap (without receiving a measurement gap ID and/or identifier corresponding directly to measurement gap).

Furthermore, the measurement gap canceling circuitry 145, 155 may be configured to dynamically adjust a time, selection, indication, and/or execution of measurement gap canceling operations based on a determining of related conditions, such as the "processing time" for a resource (e.g., UE 112) that may be involved in measurement gap canceling. As used herein, "processing time" related to measurement gap canceling may refer to a determined minimum time, time window, time offset, (and/or other temporal factors) between the end of a received indication and the start of the measurement gap that is going to be canceled. Thus, in some embodiments, the measurement gap canceling circuitry 145, 155 may be configured to determine (e.g., calculate) a processing time that considers an amount of time required by one or more of the resources (e.g., UE, gNB, etc.) to successfully receive, extract, process, and/or decode the measurement gap canceling indication (e.g., explicit indication and/or implicit indication) and pertinent information therein. The processing time may consider additional factors (e.g., in addition to processing data from the indication) that may also impact the time required for a UE 112, for example, to successfully process and/or prepare before encountering the measurement gap to be canceling. Additional factors that may be considered in determining a processing time may include but are not limited to: reconfiguring the UE 112 (e.g., for TX/RX communication); adjusting components (e.g., power on transceiver); capabilities of the resource (e.g., power, frequency range, memory, processor, etc.); and/or the like. For example, a processing time for the UE 112 may consider how quickly the UE 112 can receive/decode an RRC message, how quickly the UE 112 can apply the new measurement reconfiguration (e.g., releasing scheduled measurement gap(s), enabling transceiver for TX/RX, etc.), how quickly the UE 112 can respond to the gNB 102 (sending ACK), and/or the like. In some embodiments, the processing time may be dynamic and change based on monitored conditions (e.g., real-time), resources, and other parameters, such as capabilities of the particular UE (e.g., processing time may be UE specific), and/or network conditions (e.g., cell quality, mobility, etc.) that may be deemed relevant to and/or impacting measurement gap canceling operations. Alternatively, the processing time may be a set and/or predefined value. In some embodiments, the measurement gap canceling circuitry 145 may receive device capabilities from the UE 112 to determine and/or calculate the processing time for the UE 112 at the network side (e.g. by the gNb 102) prior to transmitting a measurement gap canceling indication, or the measurement gap canceling circuitry 155 may calculate and/or determine its processing time at the UE side (e.g., by the UE 112) for receiving a measurement gap canceling indication.

In some cases, there may be errors, inefficiencies, and other drawbacks experience by the wireless network system 100 that may be caused by failing to provide, at least, a minimum processing time for measurement gap canceling operations. As an example, if the UE 112 does not have enough time between receiving the indication from the gNB 102 and the occurrence of the measurement gap to be canceled (e.g., time offset between receiving indication and the corresponding measuring gap is less than the processing time) to suitably process the relevant information, then the UE 112 may fail to cancel the appropriate measurement gap, thereby causing an error in the measurement gap canceling operations. That is, failing to meet the processing time requirements for measurement gap canceling may lead to increased failures, inaccuracies, and/or errors in measurement gap canceling, increased disabling of TX/RX communications, and loss of optimization related to measurement gap canceling. Accordingly, to ensure that a processing time for measurement gap canceling is met as deemed necessary and/or appropriate, the measurement gap canceling circuitry 145, 155 may be configured to determine the processing time associated with measurement gap canceling operations (e.g., minimum offset between the indication and the start of the corresponding measure gap to be canceled) and/or adjusts the timing of measurement gap canceling operations in a manner that mitigates errors and/or inaccuracies due to the processing time.

The measurement gap canceling circuitry 145, 155 may be configured to determine a processing time associated with measurement gap canceling operations and then adjust the measurement gap canceling operations, for instance adjusting the corresponding measurement gap for the indication to be the first measurement gap that occurs after the defined processing time (e.g., relative to the PDCCH carrying the indication), such that errors associated with executing measurement gap canceling are decreased. In some embodiments, the measurement gap canceling circuitry 145, 155 may be configured to execute one or more functions related to the time processing aspects of canceling of measurement gaps, including, but not limited to: determining a processing time (e.g., minimum offset time between the PDCCH carrying the indication and the start of the corresponding measurement gap to be canceled/released); defining and/or adjusting the corresponding measurement gap to be canceled as a first measurement gap occurring after the determined processing time (e.g., meet and/or exceeded the minimum offset time); defining and/or adjusting the corresponding measurement gap to be canceled as the first measurement gap occurring after the indication (e.g., PDCCH carrying the indication) not based on the processing time (e.g., regardless of whether the processing time is satisfied or not); defining and/or executing additional operations based on adjusting the corresponding measurement gap to be canceled; and/or the like.

As an example, RRM related functions, such as a handover procedure between the UE 112 and the gNB 102, in accordance with some wireless technology standards (e.g., 5G NR), may include UE measurement configuration and reporting. For example, RRM related measurements, such as signal quality of cells, may be utilized in determining a target cell that is optimal and/or suitable for handover. In some embodiments, measurement configuration and reporting during the handover procedure may be set for the UE 112 to perform and/or obtain actual (e.g., real-time) measurements (e.g., RSRP, etc.) of resources (e.g., cells, beams, frequencies, etc.). For example, the handover procedure may utilize reoccurring measurements obtained (e.g., performing real-time measuring) by the UE 112 of the signal quality of source cell and neighboring cells. The UE 112 may be configured for one or more scheduled measurements gaps (e.g., a scheduled pattern for RRM related measurements) to temporarily pause normal communication operations and obtain RRM related measurements. The RRM circuit of the 140 of the gNB 102 may monitor the UE 112 to determine current conditions of the device (e.g., real-time) that may be relevant to canceling one or more measurement gaps. For example, the measurement gap canceling circuitry 145 of the gNB 102 may determine that the UE 112 has been stationary (e.g., handover not necessary, RRM related measurements may not be new, etc.) for an amount of time that exceeds a defined threshold and thus may dynamically determine to cancel at least one upcoming measurement gap for the UE 112 and continue TX/RX communication during that time for improved performance.

Furthermore, the measurement gap canceling circuitry 145 may determine a processing time for the UE 112 to appropriately process an indication of the measurement gap canceling, for instance based on the capabilities of the UE 112. For example, the measurement gap canceling circuitry 145 of the gNB 102 may receive one or more device capability parameters from the UE 112 (e.g., via capability signaling) and calculate that the UE 112 requires a minimum processing time of approximately 3 (or 5) milliseconds (ms) between the UE 112 receiving a measurement gap canceling indication (e.g., PDCCH carrying the DCI with bit for explicit indication of the measurement gap) and the measurement gap to be canceled. The measurement gap canceling circuitry 155 may also determine and/or calculate the processing time for the UE 112 (at the UE side) based on its capabilities and communicate the determined processing time to the gNB 102 to be utilized in addition to and/or in lieu of the determine processing time determined by the measurement gap canceling circuitry 145 of the gNB 102 (at the network side).

The gNB 102 may communicate a measurement gap canceling indication that signals to the UE 112 that the gNB 102 has determined that one or more of the upcoming measurement gaps are to be canceled. The measurement gap canceling circuitry 145 may implement the indication as a DCI message having an explicit format to identify the corresponding measurement gap to be canceled. For example, the gNB 102 may communicate the measurement gap canceling indication as a DCI over a PDCCH to the UE 112 to include a bit identifying a "first" corresponding measurement gap for canceling. Accordingly, the UE 112 may receive a measurement gap canceling indication which signifies that the "first" measurement gap to begin at a time after the UE 112 completes receiving the measurement gap canceling indication from the gNB 102 (e.g., end of the PDCCH) is to be canceled. The measurement gap canceling circuitry 155 may be configured to determine which measurement gap (e.g., from multiple upcoming scheduled measurement gaps for the UE 112) is the correct one to be the "first" measurement gap for applying the measurement gap canceling as indicated by the gNB 102. The measurement gap canceling circuitry 155 may be configured to determine a time period relative to receiving the indication (e.g., PDCCH carrying the DCI from the gNB 102) that also considers the previously determined processing time for the UE 112. The time period may serve as a threshold utilized by the measurement gap canceling circuitry 155 to determine which of the scheduled measurement gaps may optimally (e.g., satisfying the required processing time of the UE 112) serve as the "first" measurement gap for applying the measurement gap canceling operations (e.g., corresponding to the indication). The measurement gap canceling circuitry 155 may determine which of its scheduled measurement gaps is the first to occur approximately 3 or 5 milliseconds (ms) (e.g., determined processing time for UE 112) after the end of the PDCCH used for the UE 112 to receive measurement gap canceling indication, and then may select this measurement gap, which starts after the time period (e.g., threshold) based on the UE's 112 processing time, as the "first" corresponding measurement gap to be canceled. Consequently, the UE 112 may receive the measurement gap canceling indication with enough time before the measurement gap to be canceled begins in order to satisfy its required processing time and successfully process the data from the indication, and perform operations at the UE 112 (and/or the gNB 102) to implement canceling of the corresponding measurement gap (e.g., enabling TX/RX in measurement gaps). In other embodiments, the measurement gap canceling circuitry 155 may determine which of its scheduled measurement gaps is the first to occur approximately between 3 ms -10 ms after the end of the PDCCH used for the UE 112 to receive measurement gap canceling indication, and then may select this measurement gap, which starts after the time period based on the UE's 112 processing time, as the "first" corresponding measurement gap to be canceled.

FIG. 2 is a block diagram illustrating an example UE for measurement gap canceling including processing time determination, implementing a RRM circuit and measurement gap canceling circuitry, according to some embodiments of the present disclosure.

As illustrated in FIG. 2, an example configuration of the UE 112 (e.g., see FIG. 1) may include multiple hardware and/or software components implementing capabilities related to measurement gap canceling including processing time determination. The UE 112 depicted in FIG. 2 is not intended to be limiting, and the related structure and/or functions of the component may be implemented in a wide variety of configurations, without departing from the scope of this disclosure. In some embodiments, the UE 112 may implement the functions related to measurement gap canceling that are performed on the UE side, as disclosed herein.

Additionally, in some embodiments, a gNB (e.g., gNB 102 shown in FIG. 1) may be configured with similar hardware and/or software components to implement the capabilities related to measurement gap canceling including processing time determination, as described herein with reference to FIG. 2. In some embodiments, the gNB may implement the functions related to measurement gap canceling that are performed on the network side, as disclosed herein.

As shown in FIG. 2, the UE 112 may include an antenna 160, a radio frequency (RF) transceiver 161, TX processing circuitry 162, a microphone 163, and RX processing circuitry 164. The UE 112 may also include a speaker 165, a processor 166, an input/output (I/O) interface (IF) 167, an input device 168, a display 169, and a memory 170. The memory 170 may include an operating system (OS) 171 and one or more applications 172.

The RF transceiver 161 may receive from the antenna 160, an incoming RF signal transmitted by a gNB (e.g., gNB 102 in FIG. 1) of the network 100. The RF transceiver 161 may down-convert the incoming RF signal to generate an intermediate frequency (IF) or baseband signal. The IF or baseband signal can be sent to the RX processing circuitry 164, which may generate a processed baseband signal by filtering, decoding, and/or digitizing the baseband or IF signal. The RX processing circuitry 164 may transmit the processed baseband signal to the speaker 165 (such as for voice data) or to the processor 166 for further processing (such as for web browsing data).

The TX processing circuitry 162 may receive analog or digital voice data from the microphone 163 or other outgoing baseband data (such as web data, e-mail, or interactive video game data) from the processor 166. The TX processing circuitry 162 may encode, multiplexe, and/or digitize the outgoing baseband data to generate a processed baseband or IF signal. The RF transceiver 161 may receive the outgoing processed baseband or IF signal from the TX processing circuitry 162 and can up-convert the baseband or IF signal to an RF signal that is transmitted via the antenna 160.

The processor 166 may include one or more processors or other processing devices, and may execute the OS 171 stored in the memory 170 in order to control the overall operation of the UE 112. For example, the processor 166 may control the reception of forward channel signals, and the transmission of reverse channel signals by the RF transceiver 161, the RX processing circuitry 164, and the TX processing circuitry 162. In some embodiments, the processor 166 may include at least one microprocessor or microcontroller.

The processor 166 may also be capable of executing other processes and programs resident in the memory 170 and the RRM circuit 150, such as processes for measurement gap canceling. The processor 166 may move data into or out of the memory 170 as required by an executing process.

In some embodiments, the processor 166 may execute the applications 172 based on the OS 171 or in response to signals received from gNBs or an operator. The processor 166 may also be coupled to the I/O interface 167, which provides the UE 112 with the ability to connect to other devices, such as laptop computers and handheld computers. The I/O interface 167 may provide the communication path between these accessories and the processor 166.

The processor 166 may also be coupled to the input device 168 and the display 169. The operator of the UE 112 may use the input device 168 to enter data into the UE 112. The input device 168 may be a keyboard, touchscreen, mouse, track ball, voice input, or other device capable of acting as a user interface to allow a user in interact with the UE 112. For example, the input device 168 may include voice recognition processing, thereby allowing a user to input a voice command. In another example, the input device 168 may include a touch panel, a (digital) pen sensor, a key, or an ultrasonic input device. The touch panel can recognize, for example, a touch input in at least one scheme, such as a capacitive scheme, a pressure sensitive scheme, an infrared scheme, or an ultrasonic scheme.

The processor 166 may also be coupled to the display 169. The display 169 may be a liquid crystal display, light emitting diode display, or other display capable of rendering text and/or at least limited graphics, such as from web sites.

The memory 170 may be coupled to the processor 166. Part of the memory 170 may include a random-access memory (RAM), and another part of the memory 360 may include a Flash memory or other read-only memory (ROM). In some embodiments, the memory 170 may store data (e.g., measurement configurations, etc.) and/or models (e.g., AI models) associated with functions for measurement gap canceling including processing time determination, as disclosed herein. In some embodiments, the memory 170 may store data, instructions, and/or AI models utilized by the RRM circuit 150 and measurement gap canceling circuitry 155.

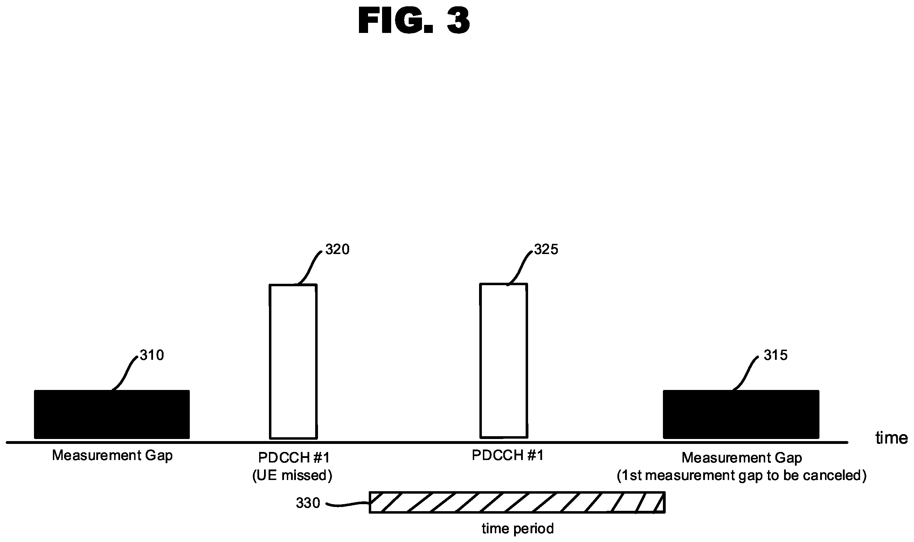

In some embodiments, the measurement gap canceling circuitry 155 may be configured to implement measurement gap canceling, including processing time determination, as disclosed herein. For example, the measurement gap canceling circuitry 155 may perform: determining measurement gap canceling; determining and/or communicating UE capabilities; determining and/or communicating a processing time for the UE 112 related to measurement gap canceling; receiving and processing a measuring gap canceling indication; calculating a time period (e.g., threshold) for determining a corresponding measurement gap to be canceled; adjusting and/or selecting (e.g., dynamically) a corresponding measurement gap to be canceled based on the processing time of the UE (e.g., satisfying the threshold); determining to override a measurement gap canceling indication; executing one or more measurement gap canceling operations; determining and/or executing functions relative to RAN1 procedures for overriding a measurement gap canceling indication; and/or the like. The measurement gap canceling circuitry 115 may determine a minimum processing time for the UE 112 associated with measurement gap canceling, and then may select the measurement gap (e.g., corresponding to a received indication) to be canceled based on a time that is relative to receiving the measurement gap canceling indication and may allow enough time for the UE 112 to suitably process information (e.g., based on the determined processing time of the UE 112) before encountering the measurement gap to be canceled. Examples of the measurement gap canceling circuitry 155 implementing functions related to measurement gap canceling, including time processing determination, are described in greater detail below in reference to FIG. 3 - FIG. 6, for example.

FIG. 3 is a diagram illustrating an example of timing for communicating measurement gap canceling indications and measurement gaps that may be determined by the measurement gap canceling circuitry, according to some embodiments of the present disclosure.

In the example of FIG. 3 a UE (e.g., UE device 112 in FIG. 1) may be configured for scheduled measurement gaps 310, 315 to perform RRM related measurements. However, after the measurement gap 310, the measurement gap canceling circuitry (e.g., measurement gap canceling circuitry 155 in FIG. 2) may receive a measurement gap canceling indication signifying that a next occurring measurement gap may be canceled and a corresponding measurement gap that may be deemed most optimal for canceling based on the processing time of the UE (and other currently monitored conditions associated with the network and/or resources) may be determined. In the example of FIG. 3 measurement gap canceling indications (e.g., having an explicit indication format) over PDCCHs 320, 325 may be transmitted from the gNB to specify a corresponding measurement gap to be canceled. In this example, the measurement gap canceling circuitry of a gNB (e.g., measurement gap canceling circuitry 145 in FIG. 1) may configure the PDCCH carrying the measurement gap cancelation indication to indicate (e.g., point to) that the first measurement gap to successively occur (e.g., after the PDCCH) is the corresponding measurement gap to be canceled (e.g., regardless of the processing timeline). In other words, the measurement gap canceling indication communicated in both PDCCH 320 and 325 may be pointing to the same measurement gap 315 as the corresponding measurement gap to be canceled by the UE. The time period 330 may be a minimum time offset between the end of a PDCCH 320, 325 that is carrying the indication to the start of a measurement gap, such as measurement gaps 315 that may be canceled. In this example, the measurement gap canceling indications associated with both PDCCHs 320, 325 identify the same measurement gap 315 as the "first" corresponding measurement gap to be canceled.

However, as depicted in FIG. 3, there can be a scenario where the UE may fail to successfully receive the measurement gap canceling indication associated with PDCCH 320 (e.g., UE misses the PDCCH 320). The gNB (e.g., gNb 102 in FIG. 1) transmitting the measurement gap canceling indications may not be aware that the UE has missed the PDCCH 320. A second measurement gap canceling indication associated with PDCCH 325 may be sent to the UE again, for other purposes such as scheduling DL or UL, indicating the measurement gap 315 for canceling.

Additionally, FIG. 3 depicts the example timeline such that the time period between the end of the second measurement gap canceling indication associated with PDCCH 325 and the start of the next successive measurement gap 315 (following the measurement gap canceling indication of PDCCH 325) may be too short and may not allow enough time to satisfy the determined time period 330 required for the UE to process the information in the received indication, as deemed necessary. In contrast, as seen in FIG. 3, the time period between the end of the first indication associated with the first PDCCH 320 and the start of the corresponding measurement gap 315 to be canceled may be long enough to satisfy the determined time period 330, but as alluded to above in the example, the indication of PDCCH 320 was not successfully received (e.g., detected and/or decoded) by the UE.

As previously described, the measurement gap canceling indication of the second PDCCH 325 may be received, but FIG. 3 illustrates that the time period between the end of the PDCCH 325 and the start of the measurement gap 315 is shorter than the determined time period 330 based on the processing time of the UE. As a result, the indication of PDCCH 325 may not allow enough time for the UE to appropriately process the information conveyed in the indication before the measurement gap 315 begins, and consequently the UE may encounter error(s) and/or fail to execute measurement gap canceling operations for the measurement gap 315 in this example (e.g., if no dynamic adjustments are performed). Additionally, the UE may not expect that the corresponding measurement gap 315 will begin before the time period 330 expires offset from the first successfully decoded and/or received PDCCH 325 in this case, as it is the responsibly of the gNB to ensure the successful reception of the first PDCCH 320. In other words, the minimum time offset(s) between the end of the first successfully decoded and/or received PDCCH carrying indication and the start of a corresponding measurement gap(s)/restriction(s) occasion to be canceled should be satisfied.

In some embodiments, the UE may not be configured to receive (e.g., expect) a measurement gap canceling indication in which the timeline for the measurement gap to be canceled is not satisfied for any of the PDCCHs pointing to the same measurement gap. Referring to FIG. 3, the time period 330offset from both PDCCHs 320 and 325 should be satisfied before the start of the measurement gap to be canceled, namely measurement gap 315. In the example of FIG. 3, the UE may be configured to cancel the measurement gap 315 in some embodiments. Otherwise, in some embodiments, the timing of PDCCH 320 and PDCCH 325 may be considered as an error case, as the gNB should ensure the successful reception of at least one PDCCH and consider the processing time of the UE.

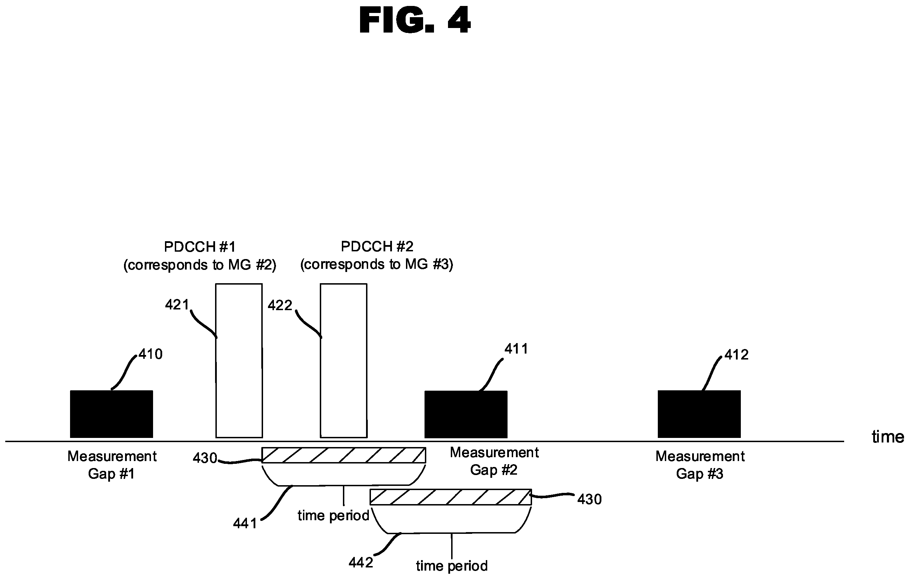

Accordingly, in some embodiments, the measurement gap canceling circuitry (e.g., at the gNB) may be configured to determine communication times to ensure that at least one PDCCH (and the associated measurement gap canceling indication) which is successfully received by the UE is received with enough time prior to the corresponding measurement gap to be canceled (e.g., the "first" subsequent measurement gap after the PDCCH) starts, in order to meet the required time period for the UE (e.g., based on the UE processing time) as described in greater detail in reference to FIG. 4.

In some embodiments, the measurement gap canceling circuitry may be configured to adjust and/or select the corresponding measurement gap to be canceled such that at least one successfully received PDCCH (associated with a measurement gap indication transmitted to the UE) satisfies the determined time period 330 (based on the determined processing time for the UE).

The measurement gap canceling circuitry may determine that a subsequent scheduled measurement gap (not shown and following the measurement gap 315) may provide enough time (e.g., measurement gap occurs after time period 330 offset from the end of the PDCCH 325) to satisfy the determined processing time 330. The measurement gap canceling circuitry may adjust to select a different "first" corresponding measurement gap for canceling than the measuring gap 315, which is the "first" measurement gap identified in the received measurement gap canceling indication (e.g., the indication associated with PDCCH 325). In some embodiments, the gNB may perform the determinations and/or adjustments to ensure that the time period between a measurement gap canceling indication (e.g., end of PDCCH) received by the UE and the corresponding measurement gap to be canceled is long enough to satisfy the determined processing time for the UE. For example, the gNB may be configured to determine and/or indicate that a "first" corresponding measurement gap to be canceled is the first measurement gap that occurs after a successfully received PDCCH by the UE and after the calculated time period (based on processing time determination). Regarding the example of FIG. 3, if the measurement gap canceling circuitry (at the gNB) is configured to set (e.g., pre-define) the indication to the "first" measurement gap occurring after a successfully received indication (e.g., measurement gap canceling indication of PDCCH 325) as the corresponding the measurement gap to be canceled without considering the processing time, the measurement gap circuitry 155 (e.g., at the UE) may also be configured to modify a measurement gap canceling indication (e.g., override, dynamically determine the corresponding measurement gap, etc.) and/or select a measurement gap to be canceled based on the processing time 330 as deemed necessary and/or appropriate. The measurement gap canceling circuitry, as disclosed herein, may be configured to ensure that the measurement gap canceling operations associated with the indication received for PDCCH 325 are optimally applied to a measurement gap that satisfies the time period 330 based on the processing time of the UE.

FIG. 4 is a diagram illustrating an example of timing for communicating measurement gap canceling indications and measurement gaps that may be determined based on processing time determination, according to some embodiments of the present disclosure.

In some embodiments, the measurement gap canceling circuitry (e.g., measurement gap canceling circuitry 155 in FIG. 2) may be configured to adjust and/or determine the corresponding measurement gap for the indication as the first occurring measurement gap which satisfies a determined processing time for the UE. That is, the measurement gap canceling circuitry may be configured to calculate a time period from receiving the measurement gap canceling indication and including the determined processing time for the UE (e.g., end of PDCCH carrying the indication + processing time 430) and adjusting and/or selecting the corresponding measurement gap to be canceled as the first measurement gap that occurs after this time period. Therefore, the measurement gap canceling circuitry may be configured to adjust the corresponding measurement gap to ensure that the UE has enough time to properly process the indication (e.g., satisfying the determined processing time 430 for the UE) before the measurement gap to be canceled is reached, in a manner that mitigates errors and improves the performance of measurement gap canceling. FIG 4 illustrates an example timing of adjusted and/or selected measurement gaps based on the determined processing time.

In the example of FIG. 4, the UE may be configured for multiple scheduled measurement gaps shown as measurement gaps 410, 411, and 412. Additionally, FIG. 4 depicts PDCCH 421 and PDCCH 422, where each PDCCH 421, 422 may be associated with a measurement gap canceling indication that is sent to the UE (from the gNB), respectively. The measurement gap canceling circuitry may be configured to determine a time period associated with the PDCCH 421 and the PDCCH 422, where each time period corresponds to the end of the respective PDCCH and includes or it is greater than the determined processing time 430 until the beginning of the corresponding measurement gap. Thus, the time period 441 for the first PDCCH 421 may be the time at the end of PDCCH 421 including processing time 430 until the beginning of the corresponding measurement gap 411, and the time period 442 for the second PDCCH 422 may be time at the end of PDCCH 422 including processing time 430 until the beginning of the corresponding measurement gap 412. The measurement canceling circuitry may be configured to select the corresponding measurement gap to be canceled as the next measurement gap immediately following the calculated time period (relative to the end of the corresponding PDCCH) and thus satisfying the required processing time 430.

As seen in FIG. 4, for PDCCH 421, the corresponding measurement gap to be canceled is measurement gap 411, as it is the first measurement gap after the associated time period 441 (e.g., satisfying the required processing time 430 for the UE). For PDCCH 422, the corresponding measurement gap to be canceled is measurement gap 412, as it is the first measurement gap after the associated time period 442 (e.g., satisfying the required processing time 430 for the UE). FIG. 4 also illustrates that for PDCCH 422, the measurement gap 411 may occur at a time after the indication associated with the PDCCH 422 is received, but the measurement gap 411 is not selected as the corresponding measurement gap 411 for the PDCCH 422 because the measurement gap 411 starts before the required processing time 430 for the UE. Therefore, indicating the measurement gap 411 in PDCCH 422 as the corresponding measurement gap to be canceled may not provide enough time for the UE to appropriately process the measurement gap canceling indication (e.g., does not satisfy the determined processing time 430).

In some embodiments, the measurement gap canceling circuitry 155 may be configured to utilize a time offset from other time instances that may be related to the measurement gap canceling indication (e.g., in addition to, or in lieu of, the end of the PDDCH) to determine that the minimum processing time for a UE has been satisfied. For example, the measurement gap canceling circuitry 155 may determine the corresponding measurement gap to be canceled based on a time period (e.g., the determined processing time) that is offset from one or more time instances related to a measurement gap canceling indication, where the time instances may include but are not limited to: the end (e.g., least symbol) of a PDCCH carrying the measuring gap canceling indication; the next slot after the slot carrying the PDCCH indication; a defined offset point from an associated PDCCH (e.g., predefined defined offset, offset dynamically indicated to the gNB via UE capability signaling); and/or the like. Accordingly, different periods of time that may be relevant to and/or may impact measurement gap canceling operations (in relation to the timing of the measurement gaps and/or the measurement gap indications) may be considered in adjusting the corresponding measurement gap to be canceled in a manner that ensures that the processing time of the UE is appropriately compensated.

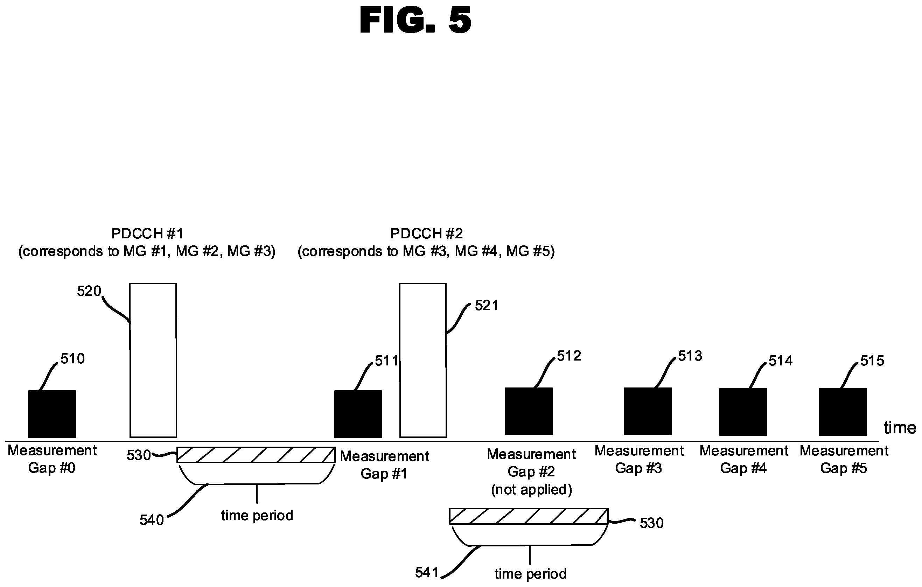

FIG. 5 is a diagram illustrating another example of timing for communicating measurement gap canceling indications for multiple measurement gaps to be canceled that may be determined by the measurement gap canceling circuitry, according to some embodiments of the present disclosure.

In some embodiments, the measurement gap canceling circuitry 155 may be configured to communicate measurement gap indications that identify one or more corresponding measurement gaps to be canceled. For example, a measurement gap indication may be implemented as a DCI message having a bit field that includes multiple bits (e.g., a bit map), where the multiple bits indicate multiple corresponding measurement gaps to be canceled. The measurement gap canceling circuitry 155 may determine that a first of the multiple measurement gaps to be canceled (indicated by the one or more bits) can be the measurement gap occurring after a time period (e.g., determined processing time for the UE) offset from the end of the measurement gap canceling indication (e.g., end of the PDCCH carrying the indication).

FIG. 5 illustrates an example timing for communicating measurement gap canceling indications that may be implemented to identify multiple corresponding measurement gaps to be canceled. In the example of FIG. 5, a UE (e.g., UE 112 in FIG. 1) may be configured for a plurality of successively scheduled measurement gaps, shown as measurement gaps 510-515, in order to perform RRM related measurements. FIG. 5 also shows that PDCCHs 520, 521 may be utilized to communicate measurement gap canceling indications to the UE (e.g., from a gNB). For example, each of the two-measurement gap canceling indications may be implemented as a DCI message, communicated respectively via the PDCCHs 520, 521. The DCI messages may have a format that includes a bit map of three bits, thereby indicating three corresponding measurement gaps to be canceled.

In some embodiments, measurement gap canceling indications utilizing a bitmap format may be configured such that each bit of the bitmap (e.g., bitmaps of different indications can have a varying size of bits) may indicate a corresponding measurement gap. Thus, in the example of FIG. 5, the measurement gap canceling indication of PDCCH 520 may have a bitmap of three bits, indicating three corresponding measurement gaps 511, 512, 513 to be canceled. Additionally, the measurement gap canceling indication of PDCCH 521 may have a bitmap of three bits, indicating three corresponding measurement gaps 513, 514, 515 to be canceled. In some embodiments, the value of the bit utilized in the format of the measurement gap canceling indication may be set to indicate a state for the corresponding measurement gap. For example, a bit set to "0" in the bit field may indicate that the corresponding measurement gap is not to be canceled, and a bit set to "1" in the bit field may indicate that corresponding measurement gap is to be canceled.

As seen in FIG. 5, each of the measurement gaps 511, 512, 513 occur after a time period 540 from the received measurement gap indication. That is, the first measurement gap 511 begins after the time period 540 (e.g., time of the end of PDCCH 520 + determined processing time) and thus may deemed to occur at a time appropriate for the UE to process the measurement gap indication. Accordingly, for PDCCH 520, the associated measurement gap canceling indication may identify each of the three corresponding measurement gaps 511, 512, 513 are to be canceled (e.g., satisfying the determined processing time for the UE).

For PDCCH 521, the associated measurement gap canceling indication identifies three corresponding measurement gaps 513, 514, 515 to be canceled, as each of the measurement gaps occur after the time period 541 (e.g., time of the end of PDCCH 521 + determined processing time) relative to the received indication and satisfy the required processing time for the UE before the first corresponding measurement gap 513 is reached. The example of FIG. 5 also illustrates that measurement gap 512 occurs before determined processing time. Thus, identifying measurement gap 512 to be canceled in the indication of PDCCH 521 may not provide enough time for the UE to process the received indication prior to encountering the measurement gap 512, and in turn may lead to errors in the UE performing the measurement gap canceling operations. Thus, the measurement gap canceling circuitry 155 may determine that the next measurement gap 513 (following after measurement gap 512), which is the first measurement gap occurring after the time period 541, is the corresponding measurement gap to be canceled.

Also, FIG. 5 illustrates a scenario where a measurement gap is identified by multiple measurement gap canceling indications. FIG. 5 shows that the first indication associated with PDCCH 520 identifies a corresponding measurement gap 513 to be canceled, and the indication associated with PDCCH 521 also identifies the corresponding measurement gap 513 to be canceled. In some embodiments, the measurement gap canceling circuitry 155 may be configured to mitigate conflicts that may be experienced relating to indications that are formatted to identify multiple corresponding measurements to be canceled. For example, the measurement gap canceling circuitry 155 may be configured such that: if a measurement gap is identified as a corresponding measurement gap to be canceled by a former (or previous) measurement gap canceling indication (e.g., PDCCH), the same measurement gap cannot be identified by a latter (or subsequent) measurement gap canceling indication as not canceled; and if a measurement gap is identified as not canceled by a former measurement gap canceling indication, a latter measurement gap canceling indication may indicate that the same measurement gap is canceled or not canceled.

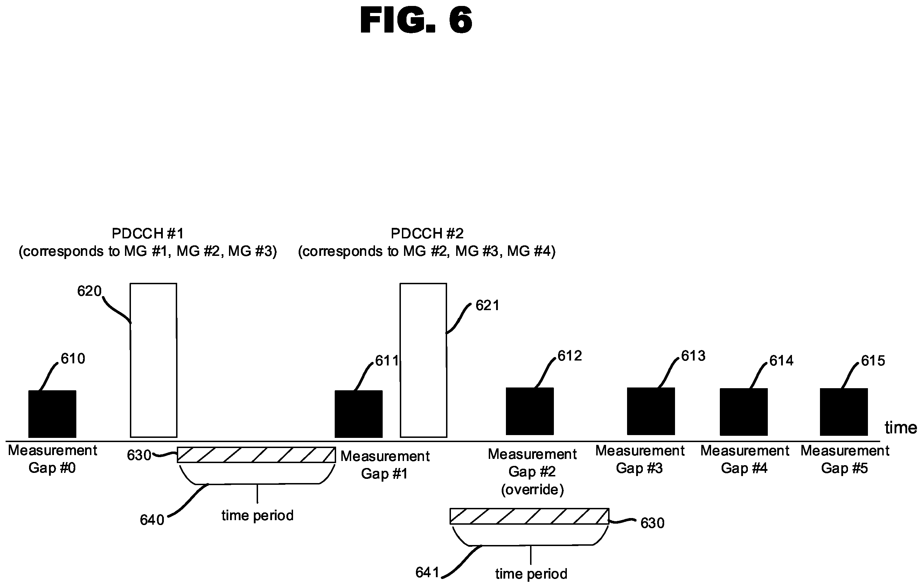

FIG. 6 is a diagram illustrating another example of timing for communicating measurement gap canceling indications for multiple measurement gaps to be canceled that may be determined by the measurement gap canceling circuitry based on the processing time, according to some embodiments of the present disclosure.

As previously described, the measurement gap canceling circuitry 155 may be configured to communicate measurement gap canceling indications that identify one or more corresponding measurement gaps to be canceled. For example, a measurement gap indication may be implemented as a DCI message having a bit field that includes multiple bits (e.g., a bit map), where the multiple bits indicate multiple corresponding measurement gaps to be canceled. Additionally, the measurement gap canceling circuitry (e.g., at the gNB) may be configured to determine that a "first" corresponding measurement gap of the multiple measurement gaps to be canceled (indicated by the one or more bits) can be the first measurement gap occurring after the received measurement gap canceling indication (e.g., not considering the processing time of the UE), for example as described above in reference to FIG. 3.

FIG. 6 illustrates another example timing for communicating measurement gap canceling indications, in which each of the measurement gap canceling indications may identify multiple corresponding measurement gaps to be canceled. In FIG. 6, a UE (e.g., UE 112 in FIG. 1) may be configured to execute a plurality of successively scheduled measurement gaps, shown as measurement gaps 610-615, for RRM related measurements. Also seen in FIG. 6, there are PDCCHs 620, 621 that may be utilized to communicate measurement gap canceling indications to the UE (e.g., from a gNB). The measurement gap canceling indications may be implemented as DCI messages having a bitmap format (e.g., bitmap size of three bits) that are communicated over the PDCCHs 620, 621 to the UE.

For instance, in the example of FIG. 6, the measurement gap canceling indication of PDCCH 620 may have a format that includes a bitmap of three bits, indicating three corresponding measurement gaps 611, 612, 613 to be canceled. Additionally, the measurement gap canceling indication of PDCCH 621 may have a format that includes a bitmap of three bits, indicating three corresponding measurement gaps 612, 613, 614 to be canceled.

In some embodiments, the measurement gap canceling circuitry (e.g., at the gNB) may be configured to determine the corresponding measurement gap to be canceled as the first measurement gap that is scheduled to start after the received indication (e.g., end of the PDCCH) and may not consider the processing time for the UE in the determination. In the example of FIG. 6, the three measurement gaps 611, 612, 613 are the first group of measurement gaps to occur following after the PDDCH 620 (in succession). Thus, the measurement gap canceling circuitry (e.g., at the gNB) may be configured to determine these measurement gaps 611, 612, 613 as the corresponding measurement gaps to be canceled (as indicated in PDCCH 620). In response, the measurement gap canceling circuitry 155 (e.g., at the UE) may be configured to determine if the corresponding measurement gaps identified in the received measurement gap canceling indications are scheduled to occur after the time period 640, including the processing time 630 for the UE, in order to mitigate potential errors and/or failures in performing the measurement gap canceling operations. For example, the "first" measurement gap 611 (e.g., the next measurement gap occurring after the PDCCH 620), of the three corresponding measurement gaps to be canceled, begins after the time period 640 (e.g., time of the end of PDCCH 620 + determined processing time 630) and thus may be deemed to occur at a time for the UE to appropriately process the measurement gap indication. Accordingly, for PDCCH 620, the measurement gap canceling circuitry 155 may cancel the corresponding measurement gaps 611, 612, 613 as indicated by the received measurement gap canceling indication of PDCCH 620 (e.g., from the gNb) and performs one or more other measurement gap canceling functions.

Regarding the PDCCH 621, the measurement gap canceling circuitry (e.g., at the gNB) may be configured to identify three measurement gaps 612, 613, 614 (e.g., in the bitmap of the measurement gap canceling indication) as the corresponding measurement gaps to be canceled. FIG. 6 illustrates that each of the measurement gaps 612, 613, 614 occur after the indication for the PDCCH 621 may be received by the UE (e.g., end of the PDCCH 621). The measurement gap canceling circuitry 155 (e.g., at the UE) may be configured to receive the indication of PDCCH 621 and determine if the "first" measurement gap, of the corresponding measurement gaps to be canceled, occurs after the time period 641 (e.g., time of the end of PDCCH 621 + determined processing time 630), and satisfies the required processing time for the UE before the corresponding measurement gaps to be canceled 612, 613, 614 start. In the example of FIG. 6 the measurement gap 612 may be scheduled to occur before the determined processing time 630 expires (e.g., measurement gap 612 starts before time period 641), while measurement gaps 613, 614 occur after the determined processing time 630 (e.g., measurement gaps 613, 614 start after the time period 641). Thus, the measurement gap canceling circuitry 155 may determine that canceling the indicated measurement gap 612 may fail to satisfy the required processing time 630 for the UE in a manner that may cause potential errors in the measurement gap canceling operations (e.g., the UE may not have time to properly analyze and/or decode the indication). Thus, the measurement gap canceling circuitry 155 may be configured to not cancel the corresponding measurement gap 612 although it is identified as a corresponding measurement gap to be canceled in the received indication of PDCCH 621 (e.g., override the measurement gap canceling indication). Accordingly, the measurement gap canceling circuitry may be configured perform various operations related to overriding a measurement gap canceling indication and therefore not cancel the corresponding measurement gap, such as measurement gap 612.

In some embodiments, the measurement gap canceling circuitry may be configured to determine and/or execute corresponding functions relative to other (RAN1) procedures when a measurement gap canceling indication is overridden and the corresponding measurement gap is not canceled. For instance, in some legacy 5G NR wireless technology systems, a UE may not be configured to monitor a PDCCH when the UE performs RRM measurements over a bandwidth that is not within the active DL bandwidth part (BWP) for the UE. If a UE determines to override (e.g., ignore) a measurement gap canceling indication, as an additional RAN1 related action, the UE may not be required to monitor a PDCCH that is overlapping with the corresponding measurement gap when the UE does perform RRM measurements during that time (rather than executing the measurement gap canceling operations) over a bandwidth that is not within the active DL BWP for the UE. Also, in some legacy 5G NR wireless technology approaches, channel state information (CSI) may be critical for enabling advanced RRM related operations, such as beamforming. A CSI reference resource determination may refer to how the network may configure and signals the resources used by the UE to measure the radio channel for CSI reporting. A CSI reference resource determination may be implemented in a valid DL slot, when the slot has at least one symbol indicated as flexile or downlink, and the slow it is not in a measurement gap. Therefore, when a UE determines to override a measurement gap canceling indication (e.g., does not cancel the measurement gap) in a slot, the UE may assume that the measurement gap still exists in accordance with normal RRM related measurement operations and furthermore the UE can determine that the slot cannot be a valid DL slot for CSI reference resource.

As previously described, a measurement gap canceling indication may be implemented in an implicit indication format, when the indication of the corresponding measurement gaps to be canceled is in a form of a time window. The measurement gap canceling circuitry 155 may be configured to adjust and/or modify a determined measurement gap based on the implicit indication format. For example, measurement gap canceling circuitry 155 may be configured to shift an originally indicated time window to start from the first measurement gap after the determined processing time for the UE (relative to the PDCCH carrying the measurement gap canceling indication). Alternatively, in some embodiments, the measurement gap canceling circuitry 155 may not be configured to adjust the time window e, but may determine to override (e.g., ignore) the indicated measurement gap(s) that are within the window and do not satisfy the processing time for the UE (e.g., ignore the measurement gap 612 that starts before thetime period 641).

In some embodiments, an implicit indication format may include the DCI scheduling transmission and/or reception that is overlapping with the measurement gap, and the measurement gap canceling circuitry 155 may be configured to adjust and/or modify a determined measurement gap based on the implicit indication format. For example, if the processing time is not satisfied, the measurement gap canceling circuitry 155 may be configured to control the UE to to override (e.g., ignore) the scheduling PDCCH for the corresponding transmission and/or reception.

Referring back to the example of FIG. 6, the measurement gap canceling circuitry 155 may determine that measurement gap 613 (following measurement gap 612) is the first measurement gap to occur after the time period 641. Accordingly, the measurement gap canceling circuitry 155 may be configured to adjust the indication of PDCCH 621, which indicates three corresponding measurement gaps to be canceled and apply the indication to the measurement gaps 613, 614 and the next following measurement gap 615. FIG. 6 illustrates that measurement gaps 613, 614, and 615 occur after the time period 641 and do satisfy the required processing time 630 for the UE, and thus may be canceled by the UE executing canceling operations as disclosed herein, such as continuing TX/RX communication within these time gaps.

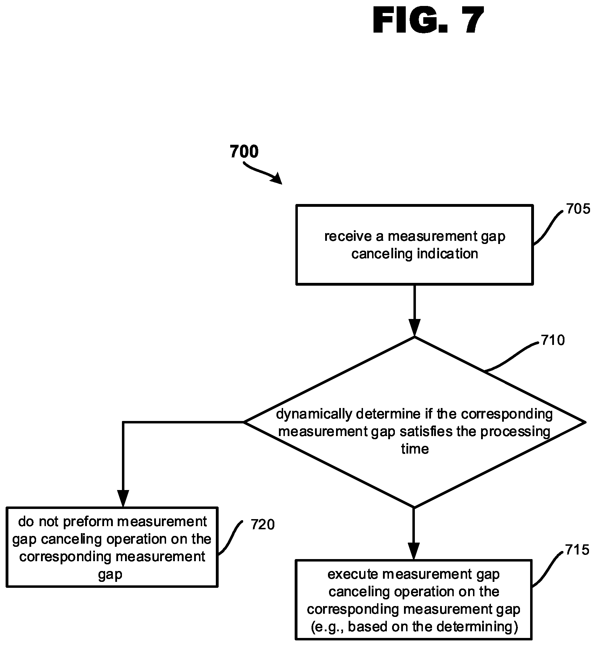

FIG. 7 is a flowchart illustrating a method 700 implementing measurement gap canceling including processing time determination, according to some embodiments of the present disclosure.

Although FIG. 7 illustrates various operations in an example measurement gap canceling method 700 according to some embodiments, embodiments according to the present disclosure are not limited thereto. For example, according to some embodiments, the measurement gap canceling method 700 may include additional operations or fewer operations, or the order of operations may vary, unless otherwise stated or implied, without departing from the scope of embodiments according to the present disclosure. In some embodiments, the method 700 may be implemented by the measurement gap canceling circuitry 155 as described in greater detail in reference to FIG. 2.

The method 700 may start at operation 705 by receiving a measurement gap canceling indication. In some embodiments, operation 705 may involve a UE receiving a measurement gap canceling indication from a gNB (e.g., see FIG. 1) and the measurement gap canceling indication may be configured to indicate one or more corresponding measurement gaps to be canceled. The measurement gap canceling indication may be implemented as a DCI message communicated over a PDCCH. In some embodiments, the received measurement gap canceling indication may be configured to have an explicit indication format (e.g., bit indication corresponding to a measurement gap to be canceled, indication of time window for measurement gaps to be canceled, etc.) and/or an implicit indication format (e.g., scheduled TX/RX to overlap with a measurement gap to be canceled). For example, the measurement gap canceling indication may be a DCI message having a format that includes a bit field, where the bit field includes a bit (or bitmap) to identify a corresponding measurement gap to be canceled.

Thereafter, at operation 710, a conditional check may be performed to determine if the corresponding measurement gap identified by the received measurement gap canceling indication (in previous operation 705) satisfies a processing time associated with the indication. In some embodiments, a processing time may signify a minimum amount of time required for a UE to successfully process a received measurement gap canceling indication prior to the occurrence of the measurement gap to be canceled. The processing time may be determined based on capabilities of the UE, the gNB, and other network resources that may be related to measurement gap canceling operations. In some embodiments, operation 710 may involve calculating a time period relative to the received measurement gap canceling indication that is based on the processing time. For example, the time period may be calculated from the time the PDCCH carrying the measurement gap canceling indication ends and including the processing time as an added offset. In some embodiments, the calculated time period may be minimum time offset(s) between the end of a received indication and the start of the corresponding measurement gap to be canceled. If it is determined in operation 710 that the processing time is satisfied, it may signify that the corresponding measurement gap to be canceled, as indication by the received measurement gap canceling indication, may occur at a time after the calculated time period and allows the UE enough time to successfully process the received measurement gap canceling indication and perform measurement gap canceling operations on the corresponding measurement gap without error and/or failure. In some embodiments, the calculated time period may be considered a defined threshold (e.g., time threshold) relating to the determined processing time, and if the measurement gap to be canceled starts after that time period it may be considered as satisfying (e.g., meeting and/or exceeding) the threshold for processing time. The method 700 may continue to operation 715 if it is determined that the processing time for the UE is satisfied for the received measurement gap canceling indication and/or the corresponding measurement gap to be canceled.

Operation 715 may involve executing measurement gap canceling operations for the corresponding measurement gap based on the determining (from previous operation 710). In some embodiments, the UE may be configured to process the received measurement gap canceling indication and execute one or more measurement gap canceling operations on the corresponding measurement gap that is indicated. The UE may execute functions to cancel the corresponding measurement gap, for instance suspending operations performed by the UE to obtain RRM related measurement and enabling TX/RX communication during the measurement gap, thereby canceling, suspending, and/or passing the measurement gap. The UE may be configured to execute other measurement gap canceling operations that may be related to canceling the corresponding measurement gap that may include but are not limited to: continuing normal operations for the device, enabling TX/RX communication; enabling transceiver(s); establishing DL/UL channel; and/or the like.

Operation 720 may involve not performing the measurement gap canceling operations if it is determined (in previous operation 710) that the processing time is not satisfied. If it is determined (in previous operation 710) that the processing time is not satisfied, it may signify that the corresponding measurement gap to be canceled, as indication by the received measurement gap canceling indication, occurs before the calculated time period and may not provide the UE with enough time to successfully process the received measurement gap canceling indication. For example, the UE may not execute measurement gap canceling operations during the corresponding measurement gap in operation 720 to mitigate errors that may arise due to improperly processing the data required for canceling the measurement gap. In some embodiments, operation 720 may involve the UE executing functions to override (e.g., disregard) and/or not cancel the corresponding measurement gap identified by the received measurement gap canceling indication, for instance continuing with the measurement gap and related operations performed by the UE to obtain RRM related measurement during the indicated measurement gap. In some embodiments, operation 720 may involve the UE determining another measurement gap (from one or more scheduled measurement gaps that may not be identified in the received measurement gap canceling indication) that can satisfy the processing time and to cancel the newly determined measurement gap.

Accordingly, the method 700 may implement measurement gap canceling, including processing time determination, in a manner that may improve data continuity in a communication network, reduce latency, enhance the overall user experience, reduce errors in executing measurement gap canceling operations, and increase the overall performance of the communication network especially in environments where limited mobility and/or interference conditions may not require frequent measurements.

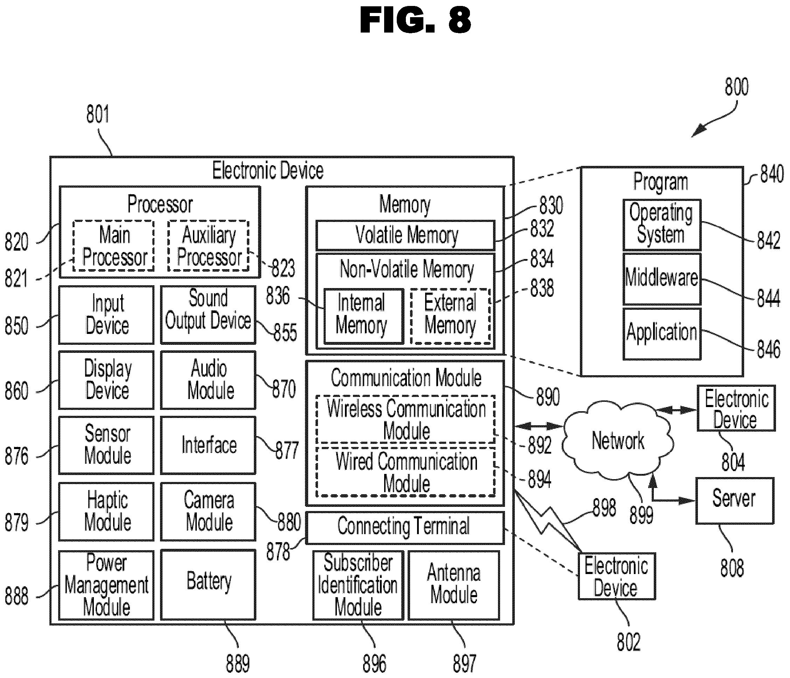

FIG. 8 is a block diagram of an electronic device, for example, a UE 112 (e.g., see FIG. 1) implementing measurement gap canceling, including processing time determination, according to some embodiments of the present disclosure. For example, processor 802 may include measurement gap canceling circuitry 155 (e.g., see FIG. 2) and perform the functions implementing measurement gap canceling, as disclosed herein.

Referring to FIG. 8, an electronic device 801 in a network environment 800 may communicate with an electronic device 802 via a first network 898 (e.g., a short-range wireless communication network), or with an electronic device 804 or a server 808 via a second network 899 (e.g., a long-range wireless communication network). The electronic device 801 may communicate with the electronic device 804 via the server 808. The electronic device 801 may include a processor 820, a memory 830, an input device 850, a sound output device 855, a display device 860, an audio module 870, a sensor module 876, an interface 877, a haptic module 879, a camera module 880, a power management module 888, a battery 889, a communication module 890, a subscriber identification module (SIM) card 896, and/or an antenna module 897. In one embodiment, at least one of the components (e.g., the display device 860 or the camera module 880) may be omitted from the electronic device 801, or one or more other components may be added to the electronic device 801. Some of the components may be implemented as a single integrated circuit (IC). For example, the sensor module 876 (e.g., a fingerprint sensor, an iris sensor, or an illuminance sensor) may be embedded in the display device 860 (e.g., a display).

The processor 820 may execute software (e.g., a program 840) to control at least one other component (e.g., a hardware or a software component) of the electronic device 801 coupled to the processor 820, and may perform various data processing or computations.

As at least part of the data processing or computations, the processor 820 may load a command or data received from another component (e.g., the sensor module 876 or the communication module 890) in volatile memory 832, may process the command or the data stored in the volatile memory 832, and may store resulting data in non-volatile memory 834. The processor 820 may include a main processor 821 (e.g., a central processing unit or an application processor (AP)), and an auxiliary processor 823 (e.g., a graphics processing unit (GPU), an image signal processor (ISP), a sensor hub processor, or a communication processor (CP)) that is operable independently from, or in conjunction with, the main processor 821. Additionally or alternatively, the auxiliary processor 823 may be adapted to consume less power than the main processor 821, or to execute a particular function. The auxiliary processor 823 may be implemented as being separate from, or a part of, the main processor 821.

The auxiliary processor 823 may control at least some of the functions or states related to at least one component (e.g., the display device 860, the sensor module 876, or the communication module 890), as opposed to the main processor 821 while the main processor 821 is in an inactive (e.g., sleep) state, or together with the main processor 821 while the main processor 821 is in an active state (e.g., executing an application). The auxiliary processor 823 (e.g., an image signal processor or a communication processor) may be implemented as part of another component (e.g., the camera module 880 or the communication module 890) functionally related to the auxiliary processor 823.

The memory 830 may store various data used by at least one component (e.g., the processor 820 or the sensor module 876) of the electronic device 801. The various data may include, for example, software (e.g., the program 840) and input data or output data for a command related thereto. The memory 830 may include the volatile memory 832 or the non-volatile memory 834.

The program 840 may be stored in the memory 830 as software, and may include, for example, an operating system (OS) 842, middleware 844, or an application 846.

The input device 850 may receive a command or data to be used by another component (e.g., the processor 820) of the electronic device 801, from the outside (e.g., a user) of the electronic device 801. The input device 850 may include, for example, a microphone, a mouse, or a keyboard.

The sound output device 855 may output sound signals to the outside of the electronic device 801. The sound output device 855 may include, for example, a speaker or a receiver. The speaker may be used for general purposes, such as playing multimedia or recording, and the receiver may be used for receiving an incoming call. The receiver may be implemented as separate from, or as a part of, the speaker.

The display device 860 may visually provide information to the outside (e.g., to a user) of the electronic device 801. The display device 860 may include, for example, a display, a hologram device, or a projector, and may include control circuitry to control a corresponding one of the display, hologram device, and projector. The display device 860 may include touch circuitry adapted to detect a touch, or may include sensor circuitry (e.g., a pressure sensor) adapted to measure the intensity of force incurred by the touch.

The audio module 870 may convert a sound into an electrical signal and vice versa. The audio module 870 may obtain the sound via the input device 850 or may output the sound via the sound output device 855 or a headphone of an external electronic device 802 directly (e.g., wired) or wirelessly coupled to the electronic device 801.

The sensor module 876 may detect an operational state (e.g., power or temperature) of the electronic device 801, or an environmental state (e.g., a state of a user) external to the electronic device 801. The sensor module 876 may then generate an electrical signal or data value corresponding to the detected state. The sensor module 876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, and/or an illuminance sensor.

The interface 877 may support one or more specified protocols to be used for the electronic device 801 to be coupled to the external electronic device 802 directly (e.g., wired) or wirelessly. The interface 877 may include, for example, a high-definition multimedia interface (HDMI), a universal serial bus (USB) interface, a secure digital (SD) card interface, or an audio interface.

A connecting terminal 878 may include a connector via which the electronic device 801 may be physically connected to the external electronic device 802. The connecting terminal 878 may include, for example, an HDMI connector, a USB connector, an SD card connector, or an audio connector (e.g., a headphone connector).

The haptic module 879 may convert an electrical signal into a mechanical stimulus (e.g., a vibration or a movement) or an electrical stimulus, which may be recognized by a user via tactile sensation or kinesthetic sensation. The haptic module 879 may include, for example, a motor, a piezoelectric element, or an electrical stimulator.

The camera module 880 may capture a still image or moving images. The camera module 880 may include one or more lenses, image sensors, image signal processors, or flashes. The power management module 888 may manage power that is supplied to the electronic device 801. The power management module 888 may be implemented as at least part of, for example, a power management integrated circuit (PMIC).

The battery 889 may supply power to at least one component of the electronic device 801. The battery 889 may include, for example, a primary cell that is not rechargeable, a secondary cell that is rechargeable, or a fuel cell.

The communication module 890 may support establishing a direct (e.g., wired) communication channel or a wireless communication channel between the electronic device 801 and the external electronic device (e.g., the electronic device 802, the electronic device 804, or the server 808), and may support performing communication via the established communication channel. The communication module 890 may include one or more communication processors that are operable independently from the processor 820 (e.g., the AP), and may support a direct (e.g., wired) communication or a wireless communication. The communication module 890 may include a wireless communication module 892 (e.g., a cellular communication module, a short-range wireless communication module, or a global navigation satellite system (GNSS) communication module) or a wired communication module 894 (e.g., a local area network (LAN) communication module or a power line communication (PLC) module). A corresponding one of these communication modules may communicate with the external electronic device via the first network 898 (e.g., a short-range communication network, such as BLUETOOTHTM, wireless-fidelity (Wi-Fi) direct, or a standard of the Infrared Data Association (IrDA)), or via the second network 899 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 892 may identify and authenticate the electronic device 801 in a communication network, such as the first network 898 or the second network 899, using subscriber information (e.g., international mobile subscriber identity (IMSI)) stored in the subscriber identification module 896.

The antenna module 897 may transmit or receive a signal or power to or from the outside (e.g., the external electronic device) of the electronic device 801. The antenna module 897 may include one or more antennas. The communication module 890 (e.g., the wireless communication module 892) may select at least one of the one or more antennas appropriate for a communication scheme used in the communication network, such as the first network 898 or the second network 899. The signal or the power may then be transmitted or received between the communication module 890 and the external electronic device via the selected at least one antenna.

Commands or data may be transmitted or received between the electronic device 801 and the external electronic device 804 via the server 808 coupled to the second network 899. Each of the electronic devices 802 and 804 may be a device of a same type as, or a different type, from the electronic device 801. All or some of operations to be executed at the electronic device 801 may be executed at one or more of the external electronic devices 802, 804, or 808. For example, if the electronic device 801 should perform a function or a service automatically, or in response to a request from a user or another device, the electronic device 801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 801. The electronic device 801 may provide the outcome, with or without further processing of the outcome, as at least part of a reply to the request. To that end, cloud computing, distributed computing, or client-server computing technology may be used, for example.

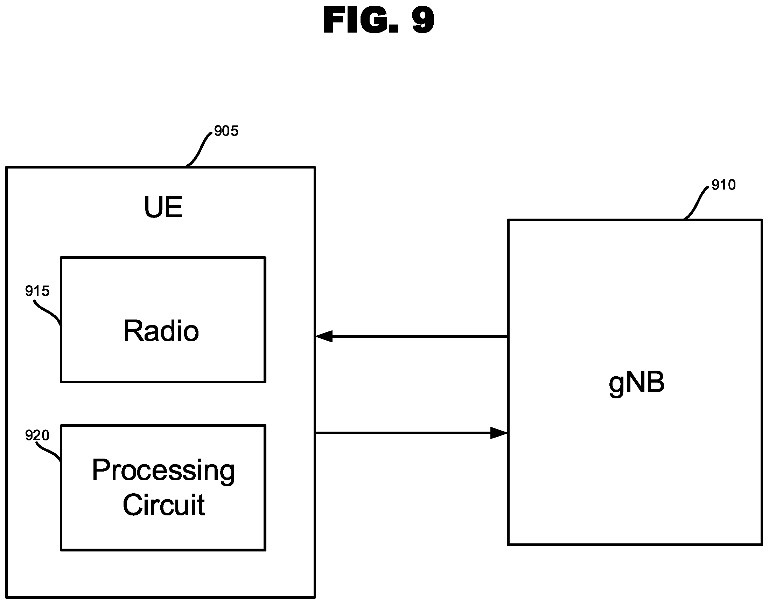

FIG. 9 illustrates a system including a UE 905 and a gNB 910 in communications with each other.

FIG. 9 shows a system including a UE 905 and a gNB 910, in communication with each other. The UE 905 may include a radio 915 and a processing circuit (or a means for processing) 920, which may perform various functions for measurement gap canceling, including processing time determination, as disclosed herein. For example, the UE 905 may implement the structure and functions of UE 112 as described in reference to FIG. 1; and the gNB 910 may implement the structure and functions of gNB 102 as described in reference to FIG. 1. The processing circuit 920 may receive, via the radio 915, transmissions from the network node (gNB) 910, and the processing circuit 920 may transmit, via the radio 915, signals to the gNB 910.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively, or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the exemplary embodiments of the present invention.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A method, comprising:
receiving, at a user equipment, UE, device (112, 801, 905), a measurement gap canceling indication, the measurement gap canceling indication comprising an indication of a corresponding measurement gap to be canceled;
determining the corresponding measurement gap to be canceled from one or more scheduled measurement gaps for the UE device (112, 801, 905) based on a processing time for the UE device (112, 801, 905); and
executing a measurement gap canceling operation for the corresponding measurement gap based on the determining.

2. The method of claim 1, wherein the measurement gap canceling indication comprises a Downlink Control Information, DCI, message received over a Physical Downlink Control Channel, PDCCH.

3. The method of claim 2, wherein the DCI message comprises a bit field including a bit for the indication of the corresponding measurement gap to be canceled.

4. The method of claim 2, wherein the DCI message comprises an indication of a time window including the corresponding measurement gap to be canceled.

5. The method of claim 2, wherein the DCI message comprises a bit field including a bitmap for indication of one or more corresponding measurement gaps to be canceled.

6. The method of claim 2, wherein determining the corresponding measurement gap to be canceled comprises determining a time period starting from an end of the PDCCH and including the processing time of the UE device (112, 801, 905).

7. The method of claim 6, wherein determining the corresponding measurement gap to be canceled comprises determining a first measurement gap from the one or more scheduled measurement gaps to start after the time period.

8. The method of claim 2, wherein determining the corresponding measurement gap to be canceled comprises determining a first measurement gap from the one or more scheduled measurement gaps to start after an end of the PDCCH.

9. The method of claim 8, further comprising determining if the first measurement gap starts after a time period starting from an end of the PDCCH and including the processing time of the UE device (112, 801, 905).

10. The method of claim 7, further comprising in response to determining the first measurement gap to start after the time period, executing the measurement gap canceling operation for the first measurement gap.

11. The method of claim 6, wherein the processing time for the UE device (112, 801, 905) is indicated via capability signaling transmitted via the UE device (112, 801, 905).

12. The method of any one of claims 1 to 11, wherein executing the measurement gap canceling operation for the corresponding measurement gap comprises enabling transmission or reception communication during the corresponding measurement gap.

13. A user equipment, UE, device (112, 801, 905), comprising:
a processor (166, 820); and
a memory (170, 830) storing instructions that, based on being executed by the processor (166, 820), cause the processor (166, 820) to perform the method according to any one of claims 1 to 12.

14. The UE device of claim 13, wherein the measurement gap canceling indication is received from a base station (102) and/ or wherein the processing time for the UE device (112, 801, 905) is indicated via capability signaling transmitted via the UE device (112, 801, 905).

15. The UE device (112, 801, 905) of claim 13 or 14, wherein the measurement gap canceling operation for the corresponding measurement gap comprises enabling a transceiver of the UE device (112, 801, 905).
